# EUROPÄISCHE PATENTSCHRIFT

(11) **EP 1 778 966 B1**
(45) Veröffentlichungstag und Bekanntmachung des Hinweises auf die Patenterteilung: **05.12.2007**
(21) Anmeldenummer: 05779389.5
(22) Anmeldetag: 13.08.2005
(51) Int. Cl.: F02M 25/07, F02B 37/18, F02B 37/22, F02B 37/02

(54) **BRENKRAFTMASCHINE MIT EINEM ABGASTURBOLADER UND EINER ABGASRÜCKFÜREINRICHTUNG**
INTERNAL COMBUSTION ENGINE HAVING AN EXHAUST GAS TURBOCHARGER AND AN EXHAUST GAS RECIRCULATION SYSTEM
MOTEUR A COMBUSTION INTERNE POURVU D'UN TURBOCOMPRESSEUR A GAZ D'ECHAPPEMENT ET D'UN DISPOSITIF DE REASPIRATION DES GAZ D'ECHAPPEMENT

(30) Priorität: 18.08.2004 DE 102004039927
(43) Veröffentlichungstag der Anmeldung: 02.05.2007
(73) Patentinhaber: DaimlerChrysler AG, 70327 Stuttgart (DE)
(72) Erfinder: KÜSPERT, Alfred, 73760 Ostfildern (DE); SCHMID, Wolfram, 72622 Nürtingen (DE); SUMSER, Siegfried, 70327 Stuttgart (DE)
(86) Internationale Anmeldenummer: PCT/EP2005/008821
(87) Internationale Veröffentlichungsnummer: WO 2006/018255

(56) Entgegenhaltungen:
- WO-A-99/35390
- DE-A1- 10 245 388
- US-A- 5 943 864
- US-B1- 6 216 459
- US-B1- 6 381 960

## Beschreibung

Die Erfindung bezieht sich auf eine Brennkraftmaschine mit einem Abgasturbolader und einer Abgasrückführeinrichtung nach dem Oberbegriff des Anspruches 1.

In der Druckschrift DE 102 45 388 A1 wird eine aufgeladene Brennkraftmaschine mit Abgasrückführeinrichtung beschrieben. Die Abgasturbine des Abgasturboladers besitzt zwei Strömungsfluten unterschiedlich großen Querschnittes, welche über eine Trennwand voneinander separiert sind und über separate Abgasleitungen mit den Abgasen jeweils einer Zylinderbank der Brennkraftmaschine versorgt werden. Aufgrund des unterschiedlich großen Querschnittes stellt sich in den Strömungsfluten der Abgasturbine ein unterschiedlicher Druck ein. Dieser Druckunterschied kann für eine verbesserte Abgasrückführung ausgenutzt werden, indem von der Abgasleitung der kleineren Strömungsflut, in welcher sich ein höherer Druck einstellt, eine Rückführleitung zum Ansaugtrakt abzweigt, sodass insbesondere bei niedrigen und mittleren Lasten und Drehzahlen der Brennkraftmaschine Abgas aus dieser Abgasleitung in den Ansaugtrakt überführt werden kann, wo eine Durchmischung mit der herangeführten Verbrennungsluft stattfindet. Hierdurch kann insbesondere im Teillastbetrieb der NOₓ-Ausstoß reduziert werden.

Die beiden Abgasleitungen zwischen den beiden Zylinderbänken der Brennkraftmaschine und den Strömungsfluten der Abgasturbine sind über eine Überbrückungsleitung miteinander verbunden, in der ein unidirektionales Strömungsventil angeordnet ist, welches nur eine Abgasströmung von der Abgasleitung der größeren Strömungsflut in Richtung der Abgasleitung der kleineren Strömungsflut erlaubt. Druckpulsationen in der Abgasleitung der größeren Strömungsflut, welche kurzfristig den Abgasgegendruck in der Abgasleitung der kleineren Strömungsflut übersteigen, können für eine Abgasüberführung in die Abgasleitung der kleineren Strömungsflut ausgenutzt werden, wodurch das Druckniveau in dieser Leitung zusätzlich erhöht und eine Abgasrückführung in größeren Betriebsbereichen durchgeführt werden kann. Die Druckregulierung zur Vermeidung unzulässig hoher Drücke erfolgt mithilfe einer die Abgasturbine umgehenden Bypassleitung, welche von der Abgasleitung der kleineren Strömungsflut abzweigt und die über ein regelbares Sperrventil einzustellen ist.

Von diesem Stand der Technik ausgehend liegt der Erfindung das Problem zugrunde, mit einfachen konstruktiven Maßnahmen in weiten Betriebsbereichen eine Abgasrückführung zu ermöglichen. Zugleich soll ein wirksamer Überlastungsschutz insbesondere im oberen Last- und Drehzahlbereich in der befeuerten Antriebsbetriebsweise sowie im Motorbremsbetrieb gegeben sein.

Dieses Problem wird erfindungsgemäß mit den Merkmalen des Anspruches 1 gelöst. Die Unteransprüche geben zweckmäßige Weiterbildungen an.

Erfindungsgemäß ist vorgesehen, dass das Ventil in der Rückführleitung und das Ventil in der Bypassleitung zu einem gemeinsamen Einstellorgan zusammengefasst werden, welches sowohl im Strömungsweg der Rückführleitung als auch im Strömungsweg der Bypassleitung liegt und zumindest drei verschiedene Positionen einnehmen kann. In einer ersten Position sind sowohl die Rückführleitung als auch die Bypassleitung abgesperrt; diese Position nimmt das Einstellorgan insbesondere in der Motorbremsphase ein. In einer zweiten Position ist die Rückführleitung geöffnet und die Bypassleitung abgesperrt; diese Position wird zweckmäßig in der befeuerten Antriebsbetriebsweise eingenommen, bei welchen eine Rückführung von Abgas in den Ansaugtrakt zur NOₓ-Reduzierung erwünscht ist, jedoch noch keine hohen Bauteilbelastungen zu erwarten sind. In einer dritten Position sind sowohl die Rückführleitung als auch die Bypassleitung freigegeben; diese Position kann das Einstellorgan insbesondere im oberen Motordrehzahlbereich bei hoher Last einnehmen, bei welcher eine unmittelbare Rückführung von Gas aus dem Abgasstrang in den Ansaugtrakt zur NOₓ-Reduktion durchgeführt wird, wobei über die Abblasung über die Bypassleitung Bauteilüberlastungen verhindert werden können.

Es kann zweckmäßig sein, eine weitere Einstellposition für das Einstellorgan vorzusehen, in der die Rückführleitung abgesperrt ist und die Bypassleitung geöffnet ist. Diese zusätzliche Position kann insbesondere bei hohen Lasten und Drehzahlen in der befeuerten Antriebsbetriebsweise angenommen werden, in der ein hoher Abgasgegendruck in den Abgasleitungen anliegt. Gegebenenfalls kommt eine derartige Einstellposition aber auch im Motorbremsbetrieb in Betracht.

Mithilfe des gemeinsamen Einstellorgans ist mit nur einem Bauteil eine Einstellung der Abgasrückführrate einerseits sowie des Druckniveaus in der Abgasleitung andererseits möglich. Dementsprechend ist auch nur ein Aktuator für die Beaufschlagung des Einstellorgans erforderlich. Außerdem kann eine kompakte Anordnung realisiert werden, da im Unterschied zu Ausführungen aus dem Stand der Technik auf ein Sperrventil verzichtet werden kann.

In einer zweckmäßigen Ausführung ist eine Überbrückungsleitung zwischen den beiden Abgasleitungen stromauf der Abgasturbine vorgesehen, über die eine Druckübertragung insbesondere von der Abgasleitung der größeren Strömungsflut hin zur Abgasleitung der kleineren Strömungsflut möglich ist. Grundsätzlich herrscht zwar in der größeren Strömungsflut ein geringeres Druckniveau; es können jedoch kurzzeitige Druckpulsationen in der Abgasleitung der größeren Strömungsflut auftreten, welche über die Überbrückungsleitung in die Abgasleitung der kleineren Strömungsflut übertragen werden können und dort zu einer Anhebung des Druckniveaus führen.

In einer vorteilhaften Ausführung ist eine Umlenkeinrichtung vorgesehen, über die wahlweise die Abgasleitung, welche der größeren Strömungsflut zugeordnet ist, entweder mit der Überbrückungsleitung oder mit der größeren Strömungsflut verbunden werden kann. Man erhält hierdurch einen zusätzlichen Freiheitsgrad bzw. eine weitere Einstellmöglichkeit, wodurch das Einsatzgebiet für die Abgasrückführung während der befeuerten Antriebsbetriebsweise einerseits und auch das Motorbremsleistungsniveau andererseits vergrößert bzw. angehoben werden kann. Wird die Umlenkeinrichtung in eine Position geschaltet, in welcher die Abgasleitung der zweiten Zylinderbank mit der Überbrückungsleitung verbunden ist, so werden die Abgase beider Zylinderbänke der Brennkraftmaschine in die Abgasleitung der kleineren Strömungsflut geführt, was zu einer signifikanten Anhebung des Abgasgegendruckes in diesem Leitungsabschnitt führt. Dieser erhöhte Abgasgegendruck ermöglicht wiederum eine Abgasrückführung in einem größeren Arbeits- bzw. Betriebsbereich der Brennkraftmaschine sowie eine höhere Motorbremsleistung in der unbefeuerten Betriebsweise.

Die Abgasturbine kann mit variabler Turbinengeometrie ausgestattet sein, über die der wirksame Turbineneintrittsquerschnitt in Abhängigkeit von Zustands- und Betriebsgrößen der Brennkraftmaschine einzustellen ist. Die variable Turbinengeometrie ist beispielsweise als Leitgitter ausgeführt, welches im Turbineneintrittsquerschnitt - im Übergang zwischen den Strömungsfluten und dem Turbinenrad - angeordnet ist bzw. in diesen einzuschieben ist. Bei dem Leitgitter kann es sich um ein axial verstellbares Bauteil handeln oder aber um ein achsfest angeordnetes Gitter mit verstellbaren Leitschaufeln.

Weitere Vorteile und zweckmäßige Ausführungen sind den weiteren Ansprüchen, der Figurenbeschreibung und den Zeichnungen zu entnehmen. Es zeigen:

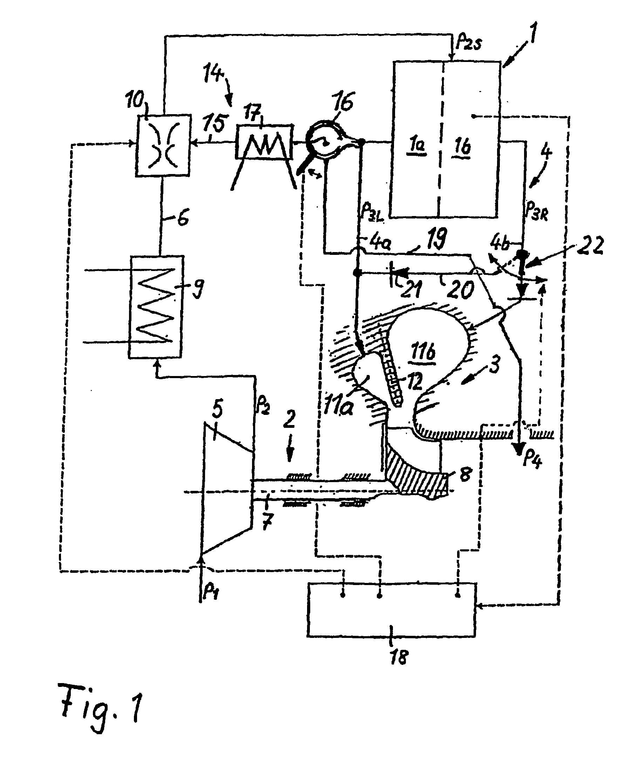

- Fig. 1: eine schematische Darstellung einer aufgeladenen Brennkraftmaschine mit Abgasrückführeinrichtung, wobei die Abgasturbine des Abgasturboladers mit zwei Strömungsfluten ausgestattet ist, die jeweils über eine Abgasleitung mit den Abgasen jeweils einer Zylinderbank der Brennkraftmaschine versorgt werden, mit einem als Drehschieber ausgeführten Einstellorgan, über das die Abgasrückführrate sowie der Abgasgegendruck in einem Abgasleitungsstrang einstellbar ist, sowie mit einer Umlenkeinrichtung, mit der die Abgase aus der zweiten Zylinderbank in den Abgasleitungsstrang der ersten Zylinderbank zu überführen sind,
- Fig. 2: eine Fig. 1 vergleichbare Brennkraftmaschine, jedoch ohne Umlenkeinrichtung,
- Fig. 3: ein Drehschieber in einer schematisierten Darstellung,
- Fig. 4: eine Darstellung gemäß Schnittlinie IV-IV aus Fig. 3.

In den Figuren sind gleiche Bauteile mit gleichen Bezugszeichen versehen.

Die in Fig. 1 dargestellte Brennkraftmaschine 1, bei der es sich um einen Otto-Motor oder einen Dieselmotor handelt, ist mit einer Abgasturboaufladung versehen, wobei der Abgasturbolader 2 eine Abgasturbine 3 im Abgasstrang 4 und einen Verdichter 5 im Ansaugtrakt 6 der Brennkraftmaschine 1 umfasst. In der Abgasturbine 3 ist ein Turbinenrad 8 drehbar angeordnet, welches von den unter Druck stehenden Abgasen der Brennkraftmaschine 1 angetrieben wird. Die Drehbewegung des Turbinenrades 8 wird über eine Welle 7 auf ein Verdichterrad im Verdichter 5 übertragen, welches Umgebungsluft, die unter dem Atmosphärendruck p₁ steht, ansaugt und auf den erhöhten Druck p₂ verdichtet. Die unter dem erhöhten Druck p₂ stehende Verbrennungsluft wird im Ansaugtrakt 6 stromab des Verdichters 5 einem Ladeluftkühler 9 zugeführt und in diesem gekühlt. Stromab des Ladeluftkühlers 9 ist im Ausführungsbeispiel eine Durchflussreguliereinrichtung 10 angeordnet, über die der Strömungsdurchfluss der Verbrennungsluft einstellbar ist. Im weiteren Verlauf wird die Verbrennungsluft unter dem Ladedruck p_{2S} den Zylindern der Brennkraftmaschine 1 zugeführt.

Die Brennkraftmaschine 1 besitzt zwei Zylinderbänke 1a und 1b, deren Abgase jeweils in Abgasleitungen 4a und 4b, die gemeinsam den Abgasstrang 4 bilden, gesammelt werden. Die beiden Abgasleitungen 4a und 4b verbinden die Zylinderbänke 1a und 1b mit jeweils einer Strömungsflut 11a und 11b der Abgasturbine 3. Die beiden Strömungsfluten 11a und 11b in der Abgasturbine 3 sind über eine Trennwand 12 separiert und besitzen einen unterschiedlich großen Strömungsquerschnitt bzw. ein unterschiedlich großes Strömungsvolumen. Die kleinere Strömungsflut 11a wird von der ersten Abgasleitung 4a mit dem Abgasgegendruck p_{3L} versorgt, die größere Strömungsflut 11b dagegen über die bei der Abgasleitung 4b mit dem Abgasgegendruck p_{3R}. In sich in der kleineren Strömungsflut 11a einstellende Druck p_{3L} übersteigt den Druck p_{3R} in der größeren Strömungsflut 11b.

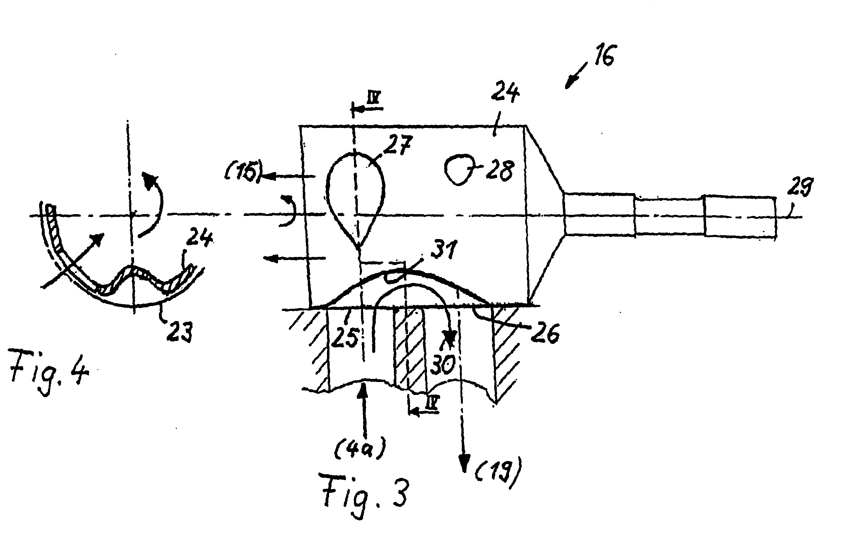

Des Weiteren ist eine Abgasrückführeinrichtung 14 zwischen dem Abgasstrang 4 stromauf der Abgasturbine 3 und dem Ansaugtrakt stromab des Ladeluftkühlers 9 vorgesehen. Die Abgasrückführeinrichtung 14 umfasst eine Rückführleitung 15, welche von der ersten Abgasleitung 4a abzweigt und über die Durchflussreguliereinrichtung 10 in den Ansaugtrakt 6 einmündet. In der Rückführleitung 15 ist ein Einstellorgan 16 angeordnet, über die der Durchfluss bzw. die Abgasrückführrate einzustellen ist. Außerdem befindet sich in der Rückführleitung 15 stromab des Einstellorgans 16 ein Abgaskühler 17. Das Einstellorgan 16 ist als Drehventil ausgeführt, dessen Aufbau in den Fig. 3 und 4 näher beschrieben wird.

Vom Einstellorgan 16 zweigt eine Bypassleitung 19 ab, welche einen Strömungsweg von der ersten Abgasleitung 4a unter Umgehung der Abgasturbine 3 in den Abgasstrang stromab der Abgasturbine ermöglicht. Das Einstellorgan 16 ist in eine Position zu schalten, in welcher die Abgase der ersten Zylinderbank 1a unter Umgehung der Abgasturbine 3 über die Bypassleitung 19 unmittelbar ausgeleitet werden können. Stromab der Abgasturbine 3 besitzen die Abgase den entspannten Druck p₄.

Zwischen den Abgasleitungen 4a und 4b stromauf der Abgasturbine 3 liegt eine Überbrückungsleitung 20, in die ein unidirektionales Strömungsventil 21 eingebaut ist, welches lediglich eine Strömung von der zweiten Abgasleitung 4, die der größeren Strömungsflut 11b zugeordnet ist, zur ersten Abgasleitung 4a, die der kleineren Strömungsflut 11a zugeordnet ist, erlaubt. Bei dem Strömungsventil 21 handelt es sich zweckmäßig um ein passives Ventil, beispielsweise ein Flatterventil. Es kommt aber auch ein aktiv einstellbares Ventil in Betracht, welches gegebenenfalls zusätzlich zu der unidirektionalen Position in eine die Überbrückungsleitung 20 vollständig freigebende bzw. diese vollständig sperrende Position zu verstellen ist. Gemäß einer weiteren, alternativen Ausführung kann auf das Strömungsventil 21 auch verzichtet werden.

In die zweite Abgasleitung 4b ist eine Umlenkeinrichtung 22 integriert, welche zwischen einer ersten Position, in welcher ein Strömungsdurchfluss zur Abgasflut 11b hergestellt ist, und einer zweiten Position, in welcher eine Verbindung zur Überbrückungsleitung 20 hergestellt ist, zu verstellen ist.

Über eine Regel- und Steuereinheit 18 sind sämtliche einstellbaren Aggregate in Abhängigkeit von Zustands- und Betriebsgrößen der Brennkraftmaschine einzustellen, so zum Beispiel die Umlenkeinrichtung 22, das Einstellorgan 16 und die Durchflussreguliereinrichtung 10. Gegebenenfalls kommt auch die Einstellung einer variablen Turbinengeometrie in der Abgasturbine sowie des Strömungsventils 21 in der Überbrückungsleitung 20 zwischen den Abgasleitungen 4a und 4b in Betracht, sofern das Strömungsventil 21 als aktiv einstellbares Ventil ausgeführt ist.

In der befeuerten Antriebsbetriebsweise der Brennkraftmaschine 1 kann zur Reduzierung der NOₓ-Emissionen Abgas aus dem Abgasstrang über die Abgasrückführeinrichtung 14 in den Ansaugtrakt geleitet werden. Hierzu wird das Einstellorgan 16 in eine die Rückführleitung 15 freigebende Position verstellt, sodass das Abgas, welches sich in der ersten Abgasleitung 4a der ersten Zylinderbank 1a befindet, über das Einstellorgan 16 und die Rückführleitung 15 in den Ansaugtrakt gelangen kann. In diesem Last- und Drehzahlbereich befindet sich das Einstellorgan 16 zweckmäßig in einer die Bypassleitung 19 sperrenden Position, sodass lediglich entsprechend der aktuellen Einstellung des Einstellorgans 16 ein Abgasanteil in den Ansaugtrakt 6 rückgeführt wird und der übrige Anteil der Abgase aus der ersten Zylinderbank 1a über die Abgasleitung 4a der kleineren Strömungsflut 11a der Abgasturbine 3 zugeführt wird.

Zur Unterstützung der Abgasrückführung kann die Umlenkeinrichtung 22 in eine Position verstellt werden, in welcher die zweite Abgasleitung 4b mit der Überbrückungsleitung 20 verbunden ist, sodass in Phasen höheren Drucks die Abgase der zweiten Zylinderbank 1b über die Überbrückungsleitung 20 in die erste Abgasleitung 4a geleitet werden und sich dort das Abgasgegendruckniveau erhöht. Um eine Überbelastung der Bauteile zu vermeiden, kann es zweckmäßig sein, das Einstellorgan 16 in eine Position zu verstellen, in welcher zwar die Rückführleitung 15 noch geöffnet ist, zugleich aber auch die Bypassleitung 19 geöffnet ist, wodurch schädliche Druckspitzen in der ersten Abgasleitung 4a abgebaut werden können.

Als weitere Position kann das Einstellorgan 16 in der Weise eingestellt werden, dass sowohl die Rückführleitung 15 als auch die Bypassleitung 19 abgesperrt sind. In diesem Fall findet keine Abgasrückführung vom Abgasstrang in den Ansaugtrakt statt. Es wird vielmehr das gesamte Abgas der Abgasturbine 3 zugeführt, wobei als zusätzliche Einstellmöglichkeit die Umlenkeinrichtung 22 entweder in ihre Position beaufschlagt werden kann, in welcher die Abgase der zweiten Zylinderbank 1b der zweiten Strömungsflut 11b zugeführt werden, oder in eine Position verstellt wird, in welcher die Abgase der zweiten Zylinderbank 1b über die Überbrückungsleitung 20 der ersten Abgasleitung 4a zugeführt werden.

Des Weiteren kommt auch eine Ausführung in Betracht, bei der die Abgasturbine 3 mit einer variabel einstellbaren Turbinengeometrie ausgestattet ist, über die der wirksame Turbineneintrittsquerschnitt als Funktion von Zustands- und Betriebsgrößen einstellbar ist. Der wirksame Turbineneintrittsquerschnitt kann mithilfe der variablen Turbinengeometrie zwischen einer minimalen Stauposition und einer maximal freigebenden Öffnungsposition verstellt werden. Mithilfe der variablen Turbinengeometrie kann das Leistungsniveau sowohl in der befeuerten Antriebsbetriebsweise als auch im Motorbremsbetrieb angehoben werden.

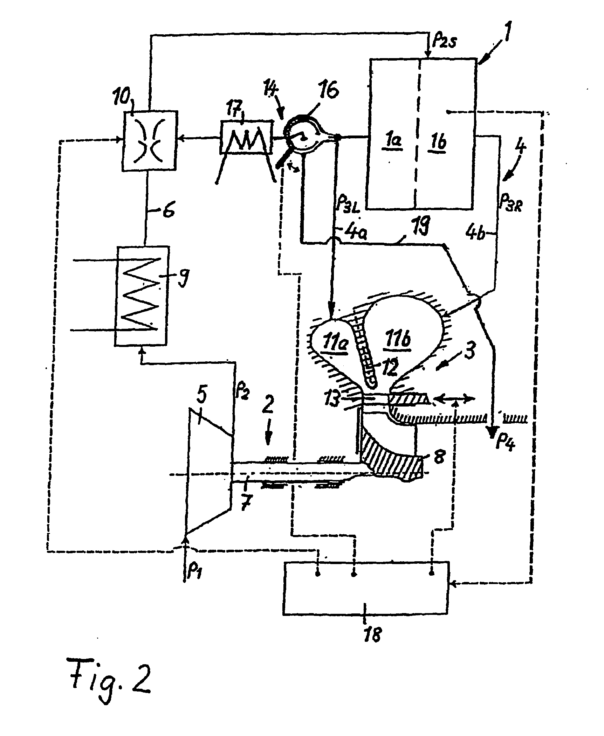

Das Ausführungsbeispiel gemäß Fig. 2 unterscheidet sich vom vorhergehenden Ausführungsbeispiel dadurch, dass keine Überbrückungsleitung zwischen den beiden Abgasleitungen 4a und 4b stromauf der Abgasturbine 3 vorgesehen ist. Dementsprechend existiert auch keine Umlenkeinrichtung, über die das Abgas aus der zweiten Abgasleitung 4b wahlweise der ersten Abgasleitung 4a oder der zweiten Strömungsflut 11b zuzuführen ist.

Andererseits ist die Abgasturbine 3 mit einer variablen Turbinengeometrie 13 ausgestattet, welche im gezeigten Ausführungsbeispiel als axial verstellbares Leitgitter ausgebildet ist, das in den Strömungseintrittsquerschnitt ein- und ausfahrbar ist, über die die Strömungsfluten 11a und 11b mit dem Turbinenrad 8 kommunizieren.

Darüber hinaus entspricht der Aufbau und die Funktionsweise dem bzw. der des vorherigen Ausführungsbeispiels.

In den Fig. 3 und 4 ist das Einstellorgan 16 dargestellt, welches im Ausführungsbeispiel als Drehventil ausgeführt ist, das um seine Ventilkörper-Längsachse 29 zur Einstellung der verschiedenen Ventilpositionen zu verdrehen ist. Das Einstellorgan 16 umfasst einen in einem Ventilgehäuse 23 drehbar gelagerten, hohlzylindrischen Ventilkörper 24, in dessen Mantel zwei Kommunikationsöffnungen 27 und 28 eingebracht sind, die durch Rotation des Ventilkörpers um die Ventilkörper-Längsachse 29 in Überdeckung mit Strömungsöffnungen 25 und 26 zu bringen sind. Die Strömungsöffnungen 25 und 26 münden radial an die Mantelfläche des Ventilkörpers 24, wobei die erste Strömungsöffnung 25 der ersten Abgasleitung 4a (in Klammern dargestellt) und die zweite Strömungsöffnung 26 der Bypassleitung 19 zugeordnet ist (ebenfalls in Klammern dargestellt). In die Mantelfläche des Ventilkörpers 24 ist außerdem eine konkave Überbrückungsausnehmung 31 eingebracht, welche die Form einer Delle in der Mantelfläche besitzt und axial sich so weit erstreckt, dass in einer bestimmten Winkellage des Ventilkörpers 24 die beiden Strömungsöffnungen 25 und 26 unmittelbar miteinander kommunizieren, sodass ein direkter Durchfluss gemäß Pfeil 30 von der ersten Abgasleitung 4a über die Strömungsöffnung 25 und die weitere Strömungsöffnung 26 in den Bypass 19 ermöglicht ist. In dieser Stellung des Einstellorgans 16 ist die Rückführleitung 15 (ebenfalls in Klammern dargestellt), welche mit dem hohlzylindrischen Innenraum des Ventilkörpers 24 kommuniziert, abgesperrt.

In einer weiteren Winkellage des Ventilkörpers 24 gelangt die erste Kommunikationsöffnung 27 in Überdeckung mit der ersten Strömungsöffnung 25 der ersten Abgasleitung 4a. In dieser Position ist die zweite Kommunikationsöffnung 28 noch nicht in Überdeckung mit der weiteren Strömungsöffnung 26 gelangt. In dieser Winkellage kann Abgas aus der ersten Abgasleitung 4a über die Strömungsöffnung 25 und die in Überdeckung stehende Kommunikationsöffnung 27 in die Rückführleitung 15 gelangen; zugleich ist die Bypassleitung 19 abgesperrt.

In einer weiteren Winkellage stehen sowohl die Kommunikationsöffnung 27 in Überdeckung mit der Strömungsöffnung 25 als auch die weitere Kommunikationsöffnung 28, welche kleiner als die erste Kommunikationsöffnung 27 ausgeführt ist, in Überdeckung mit der zweiten Strömungsöffnung 26. In dieser Winkellage des Ventilkörpers 24 ist sowohl die Rückführleitung 15 geöffnet als auch die Bypassleitung 19 geöffnet.

Schließlich kann der Ventilkörper 24 auch eine Position einnehmen, in der sämtliche Strömungs- und Kommunikationsöffnungen verschlossen sind, sodass sowohl die Rückführleitung 15 abgesperrt ist als auch die Bypassleitung 19. Die erste Abgasleitung 4a ist dagegen in allen Positionen des Ventilkörpers 24 geöffnet.

## Patentansprüche

1. Brennkraftmaschine mit einem Abgasturbolader und einer Abgasrückführeinrichtung, wobei die Abgasturbine (3) des Abgasturboladers zwei separate, dem Turbinenrad (8) vorgelagerte Strömungsfluten (11a, 11b) mit unterschiedlichem Querschnitt aufweist und jede Strömungsflut (11a, 11b) mit jeweils einer Abgasleitung (4a, 4b) zur Versorgung mit Abgas der Brennkraftmaschine (1) verbunden ist, wobei eine Rückführleitung (15) der Abgasrückführeinrichtung (14) die der kleineren Strömungsflut (11a) zugeordnete Abgasleitung (4a) mit dem Ansaugtrakt (6) der Brennkraftmaschine (1) verbindet und in der Rückführleitung (15) ein einstellbares Ventil angeordnet ist, wobei die der kleineren Strömungsflut (11a) zugeordnete Abgasleitung (4a) mit einer die Abgasturbine (3) überbrückenden Bypassleitung (19) kommuniziert, in der ein einstellbares Ventil angeordnet ist,
**dadurch gekennzeichnet,**
**dass** das Ventil in der Rückführleitung (15) und das Ventil in der Bypassleitung (19) als ein gemeinsames Einstellorgan (16) ausgeführt sind, welches im Strömungsweg sowohl der Rückführleitung (15) als auch der Bypassleitung (19) liegt und in folgende Positionen schaltbar ist:
- Rückführleitung (15) und Bypassleitung (19) abgesperrt,
- Rückführleitung (15) freigegeben und Bypassleitung (19) abgesperrt,
- Rückführleitung (15) und Bypassleitung (19) freigegeben.

2. Brennkraftmaschine nach Anspruch 1,
**dadurch gekennzeichnet,**
**dass** das Einstellorgan (16) in der Verzweigung der Rückführleitung (15) von der der kleineren Strömungsflut (11a) zugeordneten Abgasleitung (4a) angeordnet ist.

3. Brennkraftmaschine nach Anspruch 1 oder 2,
**dadurch gekennzeichnet,**
**dass** von dem Einstellorgan (16) die Bypassleitung (19) abzweigt.

4. Brennkraftmaschine nach einem der Ansprüche 1 bis 3,
**dadurch gekennzeichnet,**
**dass** das Einstellorgan (16) als Drehventil ausgebildet ist.

5. Brennkraftmaschine nach Anspruch 1 bis 4,
**dadurch gekennzeichnet,**
**dass** das Drehventil einen drehbar gelagerten, hohlzylindrischen Ventilkörper (24) umfasst, in dessen Ventilkörpermantel mindestens zwei Kommunikationsöffnungen (27, 28) eingebracht sind, wobei der Ventilkörper (24) zwischen mindestens zwei Öffnungspositionen und einer Schließposition verstellbar ist und in einer ersten Öffnungsposition eine erste Strömungsöffnung (25), welche der Abgasleitung (4a) zugeordnet ist, über die Kommunikationsöffnung (27) mit dem Ventilkörperinnenraum verbunden ist, der mit der Rückführleitung (15) kommuniziert, und in der zweiten Öffnungsposition zusätzlich die zweite Kommunikationsöffnung (28) mit der zweiten Strömungsöffnung (26), die der Bypassleitung (19) zugeordnet ist, kommuniziert.

6. Brennkraftmaschine nach einem der Ansprüche 1 bis 5,
**dadurch gekennzeichnet,**
**dass** das Einstellorgan (16) zusätzlich in eine Position schaltbar ist, in der die Rückführleitung (15) abgesperrt und die Bypassleitung (19) freigegeben ist.

7. Brennkraftmaschine nach einem der Ansprüche 1 bis 6,
**dadurch gekennzeichnet,**
**dass** die beiden Abgasleitungen (4a, 4b) stromauf der Abgasturbine (3) über eine Überbrückungsleitung (20) miteinander verbunden sind.

8. Brennkraftmaschine nach Anspruch 7,
**dadurch gekennzeichnet,**
**dass** in der Überbrückungsleitung (20) ein unidirektionales Strömungsventil (21) angeordnet ist, welches eine Strömung ausschließlich in Richtung der Abgasleitung (4a) der kleineren Strömungsflut (11a) ermöglicht.

9. Brennkraftmaschine nach Anspruch 7 oder 8,
**dadurch gekennzeichnet,**
**dass** in der der größeren Strömungsflut (11b) zugeordneten Abgasleitung (4b) eine Umlenkeinrichtung (22) angeordnet ist, welche die Abgasleitung (4b) wahlweise mit der größeren Strömungsflut (11b) oder mit der Überbrückungsleitung (20) verbindet.

10. Brennkraftmaschine nach einem der Ansprüche 1 bis 9,
**dadurch gekennzeichnet,**
**dass** die Abgasturbine (3) mit einer variablen Turbinengeometrie (13) zur veränderlichen Einstellung des wirksamen Turbineneintrittsquerschnitts ausgestattet ist.

11. Brennkraftmaschine nach Anspruch 10,
**dadurch gekennzeichnet,**
**dass** die variable Turbinengeometrie (13) im Turbineneintrittsquerschnitt der ersten Strömungsflut (11a) angeordnet ist.

12. Brennkraftmaschine nach Anspruch 10 oder 11,
**dadurch gekennzeichnet,**
**dass** die variable Turbinengeometrie (13) im Turbineneintrittsquerschnitt der zweiten Strömungsflut (11b) angeordnet ist.

## Claims

1. An internal combustion engine having an exhaust gas turbocharger and an exhaust gas recirculation system, the exhaust gas turbine (3) of the exhaust gas turbocharger having two separate flow passages (11a, 11b) of different cross section mounted upstream of the turbine rotor (8) and each flow passage (11a, 11b) being connected to a respective exhaust line (4a, 4b) for supplying it with exhaust gas from the internal combustion engine (1), a return line (15) of the exhaust gas recirculation system (14) connecting the exhaust line (4a) assigned to the smaller flow passage (11a) to the intake manifold (6) of the internal combustion engine (1) and an adjustable valve being arranged in the return line (15), the exhaust line (4a) assigned to the smaller flow passage (11a) communicating with a bypass line (19), which bypasses the exhaust gas turbine (3) and in which an adjustable valve is arranged, **characterized in that** the valve in the return line (15) and the valve in the bypass line (19) take the form of a common adjusting element (16), which is situated in the flow path both of the return line (15) and of the bypass line (19) and which can be switched into the following positions:
- return line (15) and bypass line (19) shut off,
- return line (15) opened and bypass line (19) shut off,
- return line (15) and bypass line (19) opened.

2. The internal combustion engine as claimed in claim 1, **characterized in that** the adjusting element (16) is arranged in the branch of the return line (15) from the exhaust line (4a) assigned to the smaller flow passage (11a).

3. The internal combustion engine as claimed in claim 1 or 2, **characterized in that** the bypass line (19) branches off from the adjusting element (16).

4. The internal combustion engine as claimed in any one of claims 1 to 3, **characterized in that** the adjusting element (16) takes the form of a rotary valve.

5. The internal combustion engine as claimed in any one of claims 1 to 4, **characterized in that** the rotary valve comprises a rotatably supported, hollow cylindrical valve body (24) into the valve body shell of which at least two communication apertures (27, 28) are let, the valve body (24) being adjustable between at least two opening positions and one closed position, that in a first opening position a first flow aperture (25), which is assigned to the exhaust line (4a), is connected by way of the communication aperture (27) to the valve body interior, which communicates with the return line (15), and that in the second opening position the second communication aperture (28) additionally communicates with the second flow aperture (26), which is assigned to the bypass line (19).

6. The internal combustion engine as claimed in any one of claims 1 to 5, **characterized in that** the adjusting element (16) can additionally be switched into a position, in which the return line (15) is shut off and the bypass line (19) is opened.

7. The internal combustion engine as claimed in any one of claims 1 to 6, **characterized in that** the two exhaust lines (4a, 4b) are connected to one another by the bypass line (20) upstream of the exhaust gas turbine (3).

8. The internal combustion engine as claimed in claim 7, **characterized in that** a one-way flow valve (21), which only permits a flow in the direction of the exhaust line (4a) of the smaller flow passage (11a), is arranged in the bypass line (20).

9. The internal combustion engine as claimed in claim 7 or 8, **characterized in that** a baffle device (22), which selectively connects the exhaust line (4b) either to the larger flow passage (11b) or to the bypass line (20), is arranged in the exhaust line (4b) assigned to the larger flow passage (11b).

10. The internal combustion engine as claimed in any one of claims 1 to 9, **characterized in that** the exhaust gas turbine (3) is equipped with a variable turbine geometry (13) for the variable adjustment of the effective turbine inlet cross section.

11. The internal combustion engine as claimed in claim 10, **characterized in that** the variable turbine geometry (13) is arranged in the turbine inlet cross section of the first flow passage (11a).

12. The internal combustion engine as claimed in claim 10 or 11, **characterized in that** the variable turbine geometry (13) is arranged in the turbine inlet cross section of the second flow passage (11b).

## Revendications

1. Moteur à combustion interne avec un turbocompresseur à gaz d'échappement et un dispositif de recyclage des gaz d'échappement, dans lequel la turbine de gaz d'échappement (3) du turbocompresseur à gaz d'échappement comporte deux flux d'écoulement (11a, 11b) séparés avec une section transversale différente montés en amont de la roue de turbine (8) et chaque flux d'écoulement (11a, 11b) est raccordé à une conduite de gaz d'échappement (4a, 4b) pour l'alimentation du moteur à combustion interne (1) en gaz d'échappement, dans lequel une conduite de recyclage (15) du dispositif de recyclage des gaz d'échappement (14) raccorde la conduite de gaz d'échappement (4a) associée au plus petit flux d'écoulement (11a) avec la section d'aspiration (6) du moteur à combustion interne (1) et une soupape réglable est placée dans la conduite de recyclage (15), la conduite de gaz d'échappement (4a) associée au plus petit flux d'écoulement (11a) étant en communication avec une conduite de dérivation (19) qui shunte la turbine de gaz d'échappement (3), dans laquelle est placée une soupape réglable,
**caractérisé en ce que**
la soupape dans la conduite de recyclage (15) et la soupape dans la conduite de dérivation (19) sont réalisées comme un organe de réglage commun (16) qui se trouve aussi bien sur le trajet d'écoulement de la conduite de recyclage (15) que de la conduite de dérivation (19) et qui peut être commuté dans les positions suivantes :
- conduite de recyclage (15) et conduite de dérivation (19) fermées,
- conduite de recyclage (15) ouverte et la conduite de dérivation (19) fermée,
- conduite de recyclage (15) et conduite de dérivation (19) ouvertes.

2. Moteur à combustion interne selon la revendication 1,
**caractérisé en ce que**
l'organe de réglage (16) est placé dans le branchement de la conduite de recyclage (15) de la conduite de gaz d'échappement (4a) associée au plus petit flux d'écoulement (11a).

3. Moteur à combustion interne selon la revendication 1 ou 2, **caractérisé en ce que**
la conduite de dérivation (19) bifurque à partir de l'organe de réglage (16).

4. Moteur à combustion interne selon l'une quelconque des revendications 1 à 3, **caractérisé en ce que**
l'organe de réglage (16) est réalisé comme une soupape rotative.

5. Moteur à combustion interne selon les revendications 1 à 4, **caractérisé en ce que**
la soupape rotative comprend un corps de soupape (24) en forme de cylindre creux logé de manière rotative, dans l'enveloppe de corps de soupape duquel sont montées deux ouvertures de communication (27, 28), le corps de soupape (24) étant réglable entre au moins deux positions d'ouverture et une position de fermeture et, dans une première position d'ouverture, une première ouverture d'écoulement (25), qui est associée à la conduite de gaz d'échappement (4a), étant raccordée par l'intermédiaire de l'ouverture communication (27) à l'espace intérieur du corps de soupape qui communique avec la conduite de recyclage (15) et, dans la seconde position d'ouverture, en plus, la seconde ouverture de communication (28) communiquant avec la seconde ouverture d'écoulement (26) qui est associée à la conduite de dérivation 19).

6. Moteur à combustion interne selon l'une quelconque des revendications 1 à 5, **caractérisé en ce que**
l'organe de réglage (16) est commutable, en plus, dans une position dans laquelle la conduite de recyclage (15) est fermée et la conduite de dérivation (19) est ouverte.

7. Moteur à combustion interne selon l'une quelconque des revendications 1 à 6, **caractérisé en ce que**
les deux conduites de gaz d'échappement (4a, 4b) en amont de la turbine de gaz d'échappement (3) sont raccordées l'une à l'autre par une conduite de pontage (20).

8. Moteur à combustion interne selon la revendication 7, **caractérisé en ce que**
dans la conduite de pontage (20) est placée une soupape d'écoulement unidirectionnelle (21) qui permet un écoulement exclusivement dans la direction de la conduite de gaz d'échappement (4a) du plus petit flux d'écoulement (11a).

9. Moteur à combustion interne selon la revendication 7 ou 8, **caractérisé en ce que**
dans la conduite de gaz d'échappement (4b) associée au plus grand flux d'écoulement (11b) est placé un dispositif de déviation (22) qui raccorde la conduite de gaz d'échappement (4b) au choix au plus grand flux d'écoulement (11b) ou à la conduite de pontage (20).

10. Moteur à combustion interne selon l'une quelconque des revendications 1 à 9, **caractérisé en ce que**
la turbine de gaz d'échappement (3) est munie d'une géométrie de turbine variable (13) pour le réglage variable de la section d'entrée active de la turbine.

11. Moteur à combustion interne selon la revendication 10, **caractérisé en ce que**
la géométrie de turbine variable (13) est placée dans la section d'entrée de la turbine du premier flux d'écoulement (11a).

12. Moteur à combustion interne selon la revendication 10 ou 11, **caractérisé en ce que**
la géométrie de turbine variable (13) est placée dans la section d'entrée de la turbine du second flux d'écoulement (11b).
